# EUROPEAN PATENT APPLICATION

(11) **EP 1 279 991 A1**
(43) Date of publication of application: **29.01.2003**
(21) Application number: 02015501.6
(22) Date of filing: 10.07.2002
(51) Int. Cl.: G02C 5/22

(54) **Elastic hinge for eyeglasses**

(30) Priority: 26.07.2001 IT PD20010190
(71) Applicant: Prisma S.r.l., 31020 Conegliano (Treviso) (IT)
(72) Inventor: Dei Negri, Marcello, 31015 Conegliano (Treviso) (IT); Tonon, Paolo, 31015 Conegliano (Treviso) (IT)
(74) Representative: Modiano, Guido, Dr.-Ing.

(57) **Abstract**

An elastic hinge (10) for eyeglasses, comprising a female element (11), which is coupled to the front of the eyeglasses (12) and in which a bulbous wider head portion (13) of a male element (14) engages so as to provide articulation; the head portion of the male element is coupled with sliding friction contact on corresponding shoulders (16) formed within the female element (11), at the temple end, by a slot thereof through which the body of the male element passes; the hinge further comprises elastic elements (25) arranged within a recess of the temple, in which the male element is partially inserted, which act by traction between the male element and the bottom of the recess and move the head portion of the male element into abutment on the shoulders, generating contact coupling and moving the front surface of the temple into abutment on the front surface and the lateral surface of the female element.

## Description

The present invention relates to an elastic hinge for eyeglasses.

As is known, elastic hinges of extremely different types and structures, all suitable to ensure elastic extra-wide opening of the temples with respect to the front and stable open and closed positions, are currently known and widely used.

Among commercially available elastic hinges, some technically sophisticated ones have no screws for hinging the temples to the eyeglasses and utilize the geometry and elastic properties of the material of which such temples and the front of the eyeglasses are made.

However, hinges of the screwless type are not particularly simple to manufacture and their cost is sometimes rather high owing to the technology and materials used to manufacture them.

The aim of the present invention is to provide an elastic hinge for eyeglasses that has a simple structure and has no screws for mutually hinging the corresponding male and female elements.

Within this aim, an object of the invention is to provide an elastic hinge that can be associated with the most disparate kinds of eyeglasses.

Another object is to provide an elastic hinge that is strong.

Another object is to provide an elastic hinge that has a low cost.

This aim and these and other objects that will become better apparent hereinafter are achieved by an elastic hinge for eyeglasses, characterized in that it comprises a female element, which is coupled to the front of the eyeglasses and in which a bulbous wider head portion of a male element engages so as to provide articulation, said head portion of the male element being coupled with sliding friction contact on corresponding shoulders formed within said female element, at a temple end, by a slot thereof through which a body of the male element passes, said hinge further comprising elastic means arranged within an axial recess of said temple, in which said male element is partially inserted, said means acting by traction between the male element and a bottom of said axial recess and moving the head portion of the male element into abutment on the shoulders, generating said contact coupling and simultaneously moving the front surface of the temple into abutment on the front surface and the lateral surface of the female element, defining respectively stable opening and closure positions of the temple and keeping the temple assembled to the front of the eyeglasses.

Further characteristics and advantages of the invention will become better apparent from the following detailed description of a preferred but not exclusive embodiment thereof, illustrated only by way of non-limitative example in the accompanying drawings, wherein:

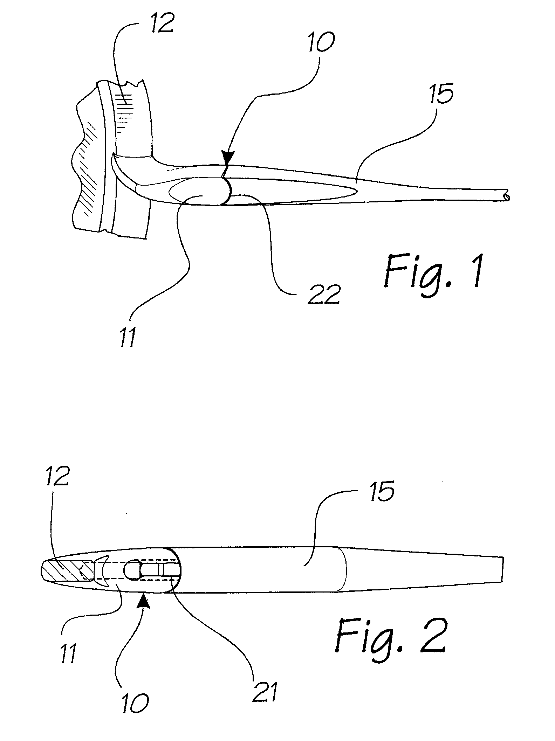

Figures 1 and 2 are views of a temple for eyeglasses provided with an elastic hinge according to the invention, seen laterally respectively from the outside and the inside of the eyeglasses;
Figures 3 and 4 are longitudinal sectional views of the hinge, taken along a horizontal plane, respectively in the open position and in the extra-wide open position;
Figure 5 is a longitudinal sectional view, taken along a vertical plane, of the hinge in the open position;
Figure 6 is a partially sectional exploded view of the hinge;
Figure 7 is a view of steps of the assembly of the hinge;
Figures 8 and 9 are views of two embodiments of the female element of the hinge according to the invention;
Figure 10 is a longitudinal sectional view, taken along a horizontal plane, of another embodiment of the female element of the hinge according to the invention.

With reference to the figures, an elastic hinge for eyeglasses of the screwless type, according to the invention, is generally designated by the reference numeral 10.

The hinge 10 comprises a female element 11, which is coupled to the front of the eyeglasses 12 and within which a bulbous head portion 13 of a male element 14 associated with a temple 15 engages, forming the hinge articulation.

The head portion 13 of the male element 14 is coupled with sliding contact on shoulders 16, which are formed within the female element 11 on the side of the temple 15, by way of elastic means, described in greater detail hereinafter, that engage a tail portion 17 of the male element 14 and a bottom 18 of an axial recess 19 formed in the front portion of the temple 15, acting by traction on the male element 14.

The male element 14 is partially inserted in the axial recess 19 of the temple 15 and can slide axially therein.

The body 20 of the male element 14 passes through a slot 21 of the female element 11, which is arranged laterally and frontally, in order to allow the articulation of the hinge, as described in greater detail hereinafter.

The elastic means act by traction on the male element 14, moving its head portion 13 into abutment against the shoulders 16 and simultaneously placing a front surface 22 of the temple 15 on a front surface 23 and a lateral surface 24 of the female element 11, respectively defining stable open and closed positions of the temple 15, keeping the temple 15 assembled to the front of the eyeglasses 12.

The elastic means are constituted by a helical spring 25 with closely spaced turns to be subjected to traction.

The male element 14 is substantially cylindrical, with a spherical head portion 13, a body 20 provided, proximate to the head 13, with mutually opposite flat portions 26 that pass through the slot 21 of the female element 11, and a tail portion 27 with a threaded axial hole 28 in which the initial portion of the helical spring 25 engages, its turns acting as worm of the thread.

The axial recess 19, within which as mentioned the male element 14 can slide axially, has a bottom 18 provided with a thread for engaging the end portion of the helical spring 25, whose turns act as worm of the thread.

A portion 29 of helical spring 25 is therefore free, so that it can be subjected to traction.

The female element 11 is provided with a transverse blind hole 30, which lies in the inner part of the female element 11 with respect to the front of the eyeglasses 12 and has dimensions that allow the insertion of the head 13 of the male element 14, with an end portion 31 that lies along the longitudinal extension of the element 11, toward the temple 15.

In practice, the blind hole 30 and its end portion 31 are connected to the slot 21, whose dimensions are such that it does not allow the passage of the head 13 of the male element 14 but only of the portion of body 20 at the flat regions 26, forming the shoulders 16 on which the head 13 rests with sliding friction so as to form the articulation of the hinge 10.

The front surface 23 and the lateral surface 24 of the female element 11 are substantially perpendicular and define the stable open and closed positions for the temple 15.

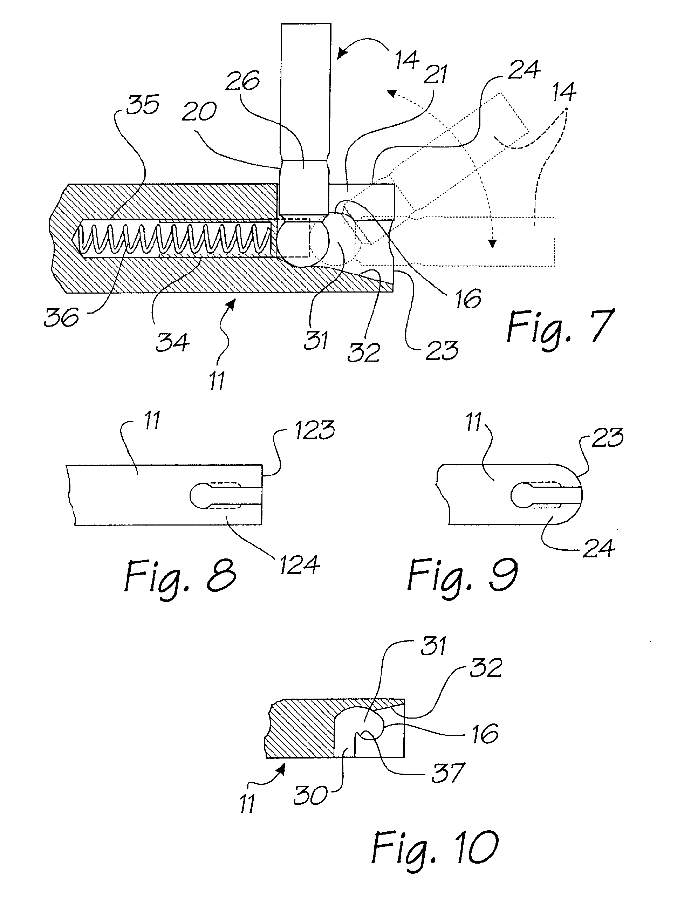

In particular, the surfaces 23 and 24 are substantially convex, as shown in the figures, and mate with the front surface 22 of the temple 15, which is complementarily concave; as an alternative, and as shown in Figure 8, they can be substantially flat, designated by the reference numerals 123 and 124, and couple to the front surface 22 of the temple 15, which is also flat.

The slot 21 of the female element 11 forms a lateral inner wall portion 32 that is inclined with respect to the front surface 23 and on which the male element 14 abuts and stops laterally, defining the extra-wide opening position for the temple 15.

The hinge 10 comprises contrast means, described in greater detail hereinafter, which are suitable to prevent any thrust toward the eyeglasses 12 applied to the temple 15 when it is in the closed configuration from extracting the head 13 of the male element 14 from the female element 11.

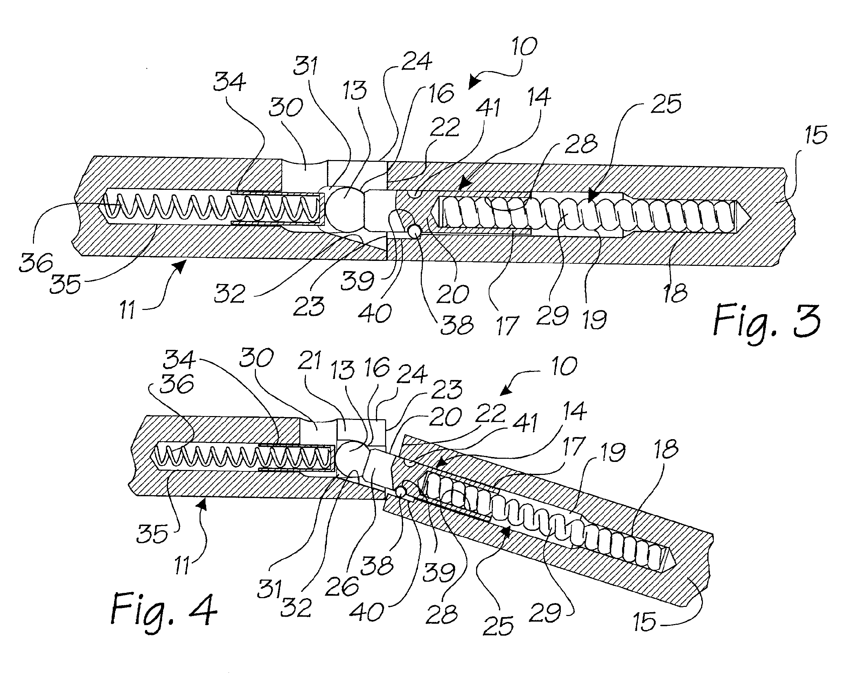

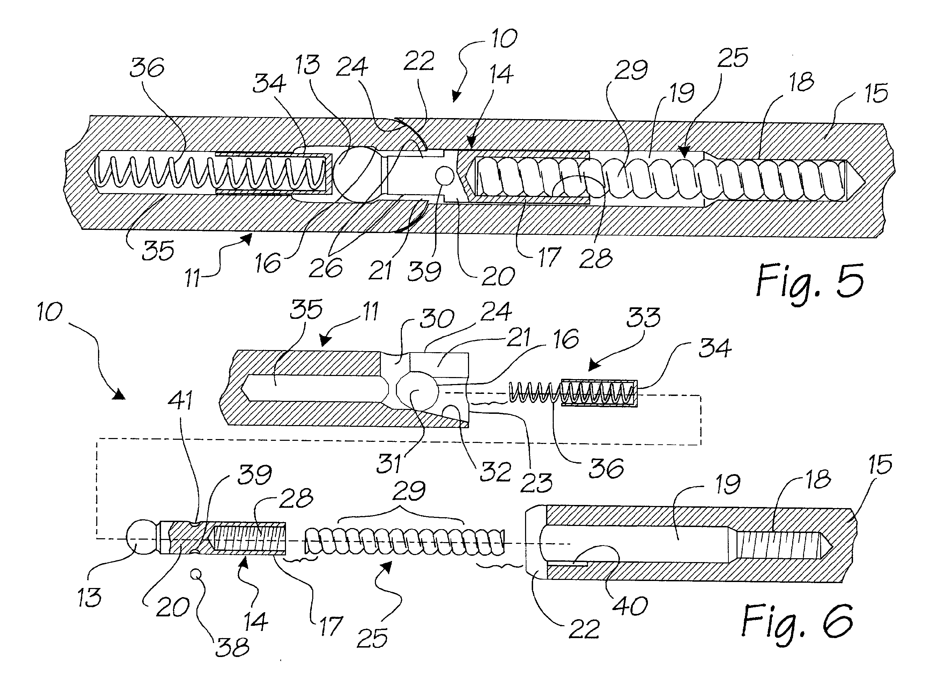

As shown in Figures 3 to 6, in a first embodiment the contrast means are constituted by a piston, generally designated by the reference numeral 33, that acts along the longitudinal extension of the female element 11, to the rear of the head 13 of the male element 14, coaxially to the end portion of the transverse hole 30.

The piston 33 comprises a cup-shaped pusher 34, which can slide within a longitudinal guide 35 formed in the end portion of the female element 11 and is associated with a helical spring 36 that is compressed between the bottom of the longitudinal guide 35 and the bottom of the pusher 34, which normally rests on the head 13 of the male element 14.

Advantageously, as shown in Figure 10, the contrast means can be constituted by a tab 37 that is substantially perpendicular to the longitudinal extension of the female element 11 and is arranged to the rear of the head 13 of the male element 14 when said male element rests on the shoulders 16.

In particular, the tab 37 is obtained by forming the transverse blind hole 30 and its end portion 31, which in this case is substantially arc-shaped, defining a path for the insertion of the head 13 within the female element 11.

The hinge 10 comprises means for preventing the mutual rotation of the male element 14 and the temple 15.

The rotation-preventing means are constituted by a ball 38 which, when the hinge 10 is assembled, straddles a corresponding first hemispherical seat 39 formed on the lateral surface of the male element 14 and a longitudinal groove 40 formed along the axial recess 19 of the temple 15.

The male element 14, finally, has on its body 20 a second hemispherical seat 41, which lies opposite the first seat 39 and, as described more clearly hereinafter, is used during the assembly of the hinge 10.

As regards operation, once the helical spring 25 has been screwed into the axial hole 28 of the male element 14, said spring is screwed onto the bottom 18 of the axial recess 19 of the temple 15, so that a portion 29 of helical spring 25 is left free to be subjected to traction.

By means of a dedicated apparatus, the male element 14, which when the spring 25 is at rest has its body 20 fully inserted within the axial recess 19, is pulled out of said axial recess 19 and is gripped at the second hemispherical seat 41, subjecting to traction the portion 29 of the spring 25 and allowing the insertion of the head portion 13 within the female element 11 through the transverse blind hole 30 and then, following the rotation of the male element 14 whose portion with flat regions 26 passes through the slot 21, into the end portion 31 of the hole 30, as shown in Figure 7.

When the female element 11 and the male element 14 are aligned, the ball 38 is arranged at the first hemispherical seat 39, and therefore the male element 14 is released, being drawn back by the helical spring 25.

In this manner, the front surface 22 of the temple 15 rests on the front surface 23 of the female element 11 and at the same time the ball 38 engages the longitudinal groove 40, preventing subsequent mutual rotations of the temple 15 and of the male element 14.

Finally, as mentioned, the contrast means, which can be constituted by the piston 33 or by the tab 37, prevent any thrust toward the eyeglasses 12 applied to the temple 15 when it is in the closed configuration from entailing the extraction of the head 13 of the male element 14 from the female element 11.

In practice, it has thus been observed that the present invention has achieved its intended aim and objects.

A screwless hinge has in fact been provided which has a simple structure, can be applied to the most disparate types of eyeglasses, and is constituted by a limited number of components.

The hinge further has a good aesthetic impact and is inexpensive, since it can be manufactured with known kinds of apparatus and technology.

The present invention is susceptible of numerous modifications and variations, all of which are within the scope of the inventive concept.

The technical details may be replaced with other technically equivalent elements.

The materials, so long as they are compatible with the contingent use, as well as the dimensions, may be any according to requirements.

The disclosures in Italian Patent Application No. PD2001A000190 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An elastic hinge for eyeglasses, **characterized in that** it comprises a female element, which is coupled to a front of the eyeglasses and in which a bulbous wider head portion of a male element engages so as to provide articulation, said head portion of the male element being coupled with sliding friction contact on corresponding shoulders formed within said female element, at a temple end, by a slot thereof through which a body of the male element passes, said hinge further comprising elastic means arranged within an axial recess of said temple, in which said male element is partially inserted, said means acting by traction between the male element and a bottom of said axial recess and moving the head portion of the male element into abutment on the shoulders, generating said contact coupling and simultaneously moving the front surface of the temple into abutment on a front surface and a lateral surface of the female element, defining respectively stable opening and closure positions of the temple and keeping the temple assembled to the front of the eyeglasses.

2. The hinge according to claim 1, **characterized in that** said female element is provided with a transverse blind hole that starts at an inner part with respect to the eyeglasses and has dimensions that allow to insert the head of said male element, with an end portion that lies along the longitudinal extension of said female element toward the temple, said blind hole and its end portion being connected to said lateral slot, whose dimensions do not allow the passage of said head, forming shoulders on which the head of the male element rests with sliding friction so as to provide the articulation of the hinge.

3. The hinge according to claim 1, **characterized in that** said elastic means are constituted by a helical spring with closely spaced turns to be subjected to traction, which engages a tail portion of said male element and the bottom of said axial recess.

4. The hinge according to claim 1, **characterized in that** said male element has substantially cylindrical dimensions, with a spherical shaped head protrusion, the body provided proximate to said head portion with mutually opposite flat regions that allow the body to pass through said slot of the female element, and a tail portion with a threaded axial hole for engaging an initial portion of said helical spring, whose turns act as worm of the thread.

5. The hinge according to claim 1, **characterized in that** said axial recess, on which said male element can slide axially, has a bottom provided with a thread for engaging the end portion of said helical spring, whose turns act as worm of the thread.

6. The hinge according to claim 1, **characterized in that** said front and lateral surfaces of said female element are substantially perpendicular so as to form the stable open and closed positions of said temple.

7. The hinge according to claim 6, **characterized in that** said front and lateral surfaces are substantially convex and shaped complementarily to the concave front surface of said temple.

8. The hinge according to claim 6, **characterized in that** said front and lateral surfaces are flat and shaped complementarily to the flat front surface of said temple.

9. The hinge according to claim 1, **characterized in that** said slot of said female element forms a lateral inner wall portion that is inclined with respect to the front surface and on which the male element abuts laterally and stops, defining an extra-wide opening position for the temple.

10. The hinge according to claim 1, **characterized in that** it comprises contrast means for said head of the male element.

11. The hinge according to claim 10, **characterized in that** said contrast means are constituted by a tab, which is arranged substantially at right angles to a longitudinal orientation of said female element and to a rear of said head of the male element when said male element rests on said shoulders.

12. The hinge according to claim 11, **characterized in that** said tab is obtained by forming a transverse blind hole and its end portion, which is shaped like a circular arc, forming a path for inserting said head into said female element.

13. The hinge according to claim 10, **characterized in that** said contrast means are constituted by a piston that acts along the longitudinal extension of said female element, to the rear of said head of the male element, which is coaxial to said end portion of the transverse hole.

14. The hinge according to claim 13, **characterized in that** said piston is constituted by a cup-shaped pusher that can slide within a longitudinal guide and is associated with a helical spring that is compressed between the bottom of said guide and the bottom of said cup, which normally rests on the head of the male element.

15. The hinge according to claim 1, **characterized in that** it comprises means for preventing mutual rotation of the male element and the temple.

16. The hinge according to claim 15, **characterized in that** said means for preventing mutual rotation are constituted by a ball that is arranged, when the hinge is assembled, so as to straddle a corresponding first hemispherical seat formed on the lateral surface of said male element and a longitudinal groove formed on said axial recess of the temple.

17. The hinge according to claim 16, **characterized in that** it comprises a second hemispherical seat formed on said body of the male element opposite said first seat.
